# EUROPÄISCHE PATENTSCHRIFT

(11) **EP 1 093 550 B1**
(45) Veröffentlichungstag und Bekanntmachung des Hinweises auf die Patenterteilung: **10.04.2002**
(21) Anmeldenummer: 99929237.8
(22) Anmeldetag: 18.06.1999
(51) Int. Cl.: F16H 57/04, B61C 9/38

(54) **SCHNELLLAUFENDES GETRIEBE MIT ÖLSCHMIERUNG, INSBESONDERE FÜR GEKAPSELTE BAHNANTRIEBE**
HIGH SPEED GEAR WITH OIL LUBRICATION, ESPECIALLY FOR ENVIRONMENTALLY SEALED RAILWAY DRIVING MECHANISM
ENGRENAGE A VITESSE DE ROTATION ELEVEE LUBRIFIE PAR HUILE, EN PARTICULIER POUR ENTRAINEMENTS DE TRAIN ENTIEREMENT FERMES

(30) Priorität: 04.07.1998 DE 19831208
(43) Veröffentlichungstag der Anmeldung: 25.04.2001
(73) Patentinhaber: DaimlerChrysler Rail Systems GmbH, 13627 Berlin (DE)
(72) Erfinder: HALLMANN, Dieter, D-10779 Berlin (DE); SKUMAWITZ, Erwin, D-14621 Schönwalde (DE)
(74) Vertreter: Thielmann, Andreas
(86) Internationale Anmeldenummer: EP9904156
(87) Internationale Veröffentlichungsnummer: WO0001964

(56) Entgegenhaltungen:
- DE-A- 4 244 684
- ANTRIEBSTECHNIK, Bd. 33, Nr. 9, 1994, Seiten 60-65, XP002115227

## Beschreibung

Die Erfindung betrifft ein schnellaufendes Getriebe mit Ölschmierung, insbesondere für gekapselte Bahnantriebe, wobei Ölrückläufe aus den Labyrinthkammern berührungsfreier Wellendichtungen zur Ölwanne des Getriebekastens führen.

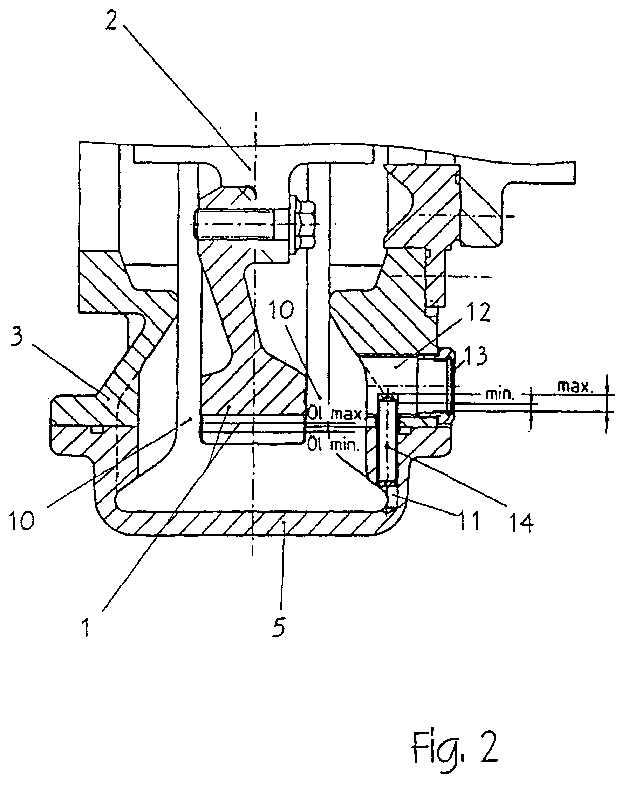

Als nächst kommender Stand der Technik wird die DE-A-4 244 684 angesehen, die dem Fachmann offenbart, daß Ölnuten zumindest in einem Teil ihres Umfanges von einem Ölsammelraum umgeben sind, der nach dem ersten Ausführungsbeispiel umlaufend in den äußeren Labyrinthring eingearbeitet ist. In den Ölnuten aufgefangenes, von den Spritzringen des inneren Labyrinthringes abgeschleudertes Öl wird durch unterschiedliche Ölablaufkanäle in den Ölsammelraum abgeleitet (s. insbes. Figur 2 und Spalte 3, Zeilen 3 bis 10). Der Ölsammelraum ist weitgehend vom Inneren des Gehäuses abgeschirmt, indem er gegenüber dem Inneren des Gehäuses, also dem Getriebegehäuse, von einem Ölfangring verschlossen und als beruhigter Raum ausgebildet ist, der nur auf einem eng begrenzten Teil seines Umfanges einen Ölauslauf aufweist Diese Öffnung wird gegen das Innere des Gehäuses zusätzlich durch eine Ölfanglippe abgeschirmt, die die gesamte Dichtung umgibt, sich im wesentlichen radial und schräg zur Labyrinthachse im Inneren des Gehäuses erstreckt, Teil des Ölfangringes ist und die LabyrinthDichtung in an sich bekannter Weise vor herablaufendem oder abgeschleudertem Öl abschirmt (s. Spalte 3, Zeilen 23 bis 37).

Die Schmierung moderner, schnellaufender Bahnantriebe basiert im allgemeinen darauf, daß das Großrad während des Anlaufs mittels seiner Zähne nach Art einer Tauchschmierung Öl aus der Ölwanne des Getriebekastens aufnimmt, im weiteren das antreibende Ritzel benetzt und infolge seiner Zerklüftung mit anwachsender Drehzahl ein feines Öl-Luft-Gemisch erzeugt, das sich im gesamten Getriebe verteilt und damit auch die Lagerstellen der Antriebswellen im Getriebekasten beaufschlagt.

Eine zuverlässige, verschleißlose und weitestgehend öl- und gasdichte Abdichtung an den berührungslosen Wellendichtungen dieser Lager nach außen hin ist dabei ein großes Problem für Antriebe mit schnellaufenden, großen Zahnrädern. Zur Anwendung kommen regelmäßig Labyrinthdichtungen, deren Funktion auf der Drosselung des Druckes im Spalt beruht. Aus den Labyrinthkammern der Dichtungen wird der dort kondensierende Ölnebel über ein Siphonsystem stetig abgeschieden und über Ölrückläufe im Kreislauf in den geschlossenen Getriebekasten zurückgeleitet, womit verhindert werden soll, daß nennenswert Lecköl über die äußeren Schmutzabfuhrkammern der Labyrinthdichtungen nach außen tritt. Die Ölrücklaufkanäle besitzen hierzu ein Gefälle und münden oberhalb der Ölwanne.

Bei sehr schnellaufenden Getrieben tritt dabei die Erscheinung auf, daß das Öl-Luft-Gemisch mit annähernd der Winkelgeschwindigkeit der Großrades im Getriebekasten als sogenannte Schleppströmung mitgenommen wird und sich infolge Eigenreibung erheblich erwärmt und ausdehnt und demzufolge die Labyrinthdichtungen verstärkt beaufschlagt. Das erfordert unter anderem eine äußerst funktionstüchtige Ölrückführung aus den Labyrinthkammern der Dichtungen, um einen Ölaustritt zu verhindern.

Um die Reibungswärme des Ölnebels auf ein erträgliches Maß zu reduzieren, muß außerdem angestrebt werden, die Ölmenge im Getriebekasten und damit die Zähigkeit des Öl-Luft-Gemisches möglichst gering zu halten und möglichst ungestörte Strömungsverhältnisse im Getriebekasten zu schaffen. Andererseits muß gewährleistet sein, daß das Getriebe auf keinen Fall trockenlaufen darf, was zum Festfressen führen würde, weshalb eine für den sicheren Betrieb unbedingt notwendige Ölmenge nicht unterschritten werden darf. Hieraus ergeben sich sehr enge Ölstandstoleranzen, die zuverlässig überwacht werden müssen.

Es stellt sich somit speziell für Bahnantriebe, aber auch für anderweitig einsetzbare, schnellaufende Getriebe die Aufgabe, die Ölabführung aus den Spaltdichtungen zu verbessern, um Leckageöl weitestgehend zu vermeiden. Es soll auch eine möglichst zuverlässige, das heißt empfindliche und lagetolerante Ölstandsanzeige ohne wesentliche Störung der Strömungsverhältnisse im Getriebekasten geschaffen werden.

Die Aufgabe wird erfindungsgemäß durch die in Anspruche 1 angegebenen Merkmale gelöst. Vorteilhafte Ausgestaltungen geben die begleitenden Unteransprüche an.

Erfindungsgemäß wird mit Hilfe des Bernoulli-Effekts bei laufendem Getriebe ein Unterdruck an der Mündung der Ölrückläufe erzeugt, der das Abfließen des Öls aus den Labyrinthkammern berührungsfreier Wellendichtungen wirksam unterstützt. Nach Bernoulli ist nämlich der statische Druck in einem schnellströmenden Fluid kleiner als in einem ruhenden bzw. langsameren Fluid, und zwar um so kleiner, je größer die Strömungsdifferenz ist. Verengt man also ein von der Schleppströmung durchströmtes Gebiet des Getriebekastens künstlich, so erhöht sich in diesem Gebiet die Geschwindigkeit der Schleppströmung und der statische Druck sinkt an dieser Stelle relativ zum Gesamtsystem. Münden die Ölrückläufe in ein solches Gebiet ein, so entsteht in der Ölrückleitung während des Betriebes ein Sog, der das Abfließen des im Dichtungssystem kondensierten Öls wesentlich unterstützt. Die getroffene Anordnung wirkt damit physikalisch wie eine VenturiDüse, wenngleich für eine andere Zweckbestimmung. Zweckmäßigerweise wird die Engstelle in ein Gebiet des Getriebekastens gelegt, in dem die größte Geschwindigkeit der Schleppströmung herrscht, nämlich in Nähe der Großradperipherie. Eine besonders geeignete Stelle findet sich unter Ausnutzung des Leitungsgefälles der Ölrückläufe unmittelbar oberhalb der Ölwanne. Werden die Verengungen durch Materialverdickungen der Wände des Getriebekastens in diesem Bereich geschaffen, so können diese in vorteilhafter Weise zugleich Bohrungen für die Ölrückläufe aus dem Großradlager aufnehmen. Die Materialverdickungen sind bevorzugt so geformt, daß die Querschnittsveränderung der Schleppströmung in beiden Drehrichtungen möglichst ohne Wirbelbildung erfolgt. Außerdem kann in einer unmittelbar daneben angeordneten, weiteren Bohrung noch ein Schwimmer gelagert sein, der durch ein Schauglas zwecks Ablesens des Ölstandes beobachtbar ist. Diese Anordnung des Schwimmers noch im verdickten Bereich der Gehäusewandung trägt dazu bei, daß das Strömungsverhalten des Öl-Luftgemisches weder in der Engstelle noch in weiteren strömungssensiblen Gebieten gestört wird weiterhin entfallen die sonst üblichen, aufwendigen Rohrführungen für den Schwimmer. Darüber hinaus wird das Ablesen des Ölstandes in diesem Bereich, wenn er in vorteilhafter Weiterbildung der Erfindung mit dem Flächenschwerpunkt des zulässigen Ölbadpegels zusammenfällt, unabhängig vom Schiefstand des Getriebekastens, bedingt beispielsweise durch die Streckenneigung. Nicht zuletzt sorgen die hier mündenden Ölrückläufe für eine hinreichend große Ölmenge für den Schwimmer bei Getriebestillstand.

Um die Sogwirkung auch für die Abführung des Öls aus dem Lager des Antriebsritzels zu nutzen, können dessen Ölrückführleitungen gleichfalls in dem künstlich verengten Gebiet einmünden.

Der Aufwand und Platzbedarf für die erfindungsgemäße Ausbildung des Getriebes ist vernachlässigbar gering und die Fertigung unproblematisch. Die Einrichtung selbst ist wartungslos und benötigt keinerlei Fremdenergie. Mit Ausnahme eines unter Umständen benutzten Schwimmers zwecks Anhebung des Ableseniveaus werden keinerlei mechanisch bewegliche Teile benötigt. Weitere vorteilhafte Ausbildungen sind den Unteransprüchen zu entnehmen.

Die Erfindung soll anhand eines Ausführungsbeispiels näher erläutert werden. In der zugehörigen Zeichnung zeigt
Fig. 1: einen Schnitt A-A durch den Getriebekasten eines Bahnantriebs in der Ebene der Großradachse gemäß Fig. 3,
Fig. 2 einen Schnitt B-B gemäß Fig. 3 parallel zum Schnitt A-A in Schwerpunktebene des Ölpegels und
Fig. 3: eine Seitenansicht auf den Getriebekasten in Achswellenrichtung.

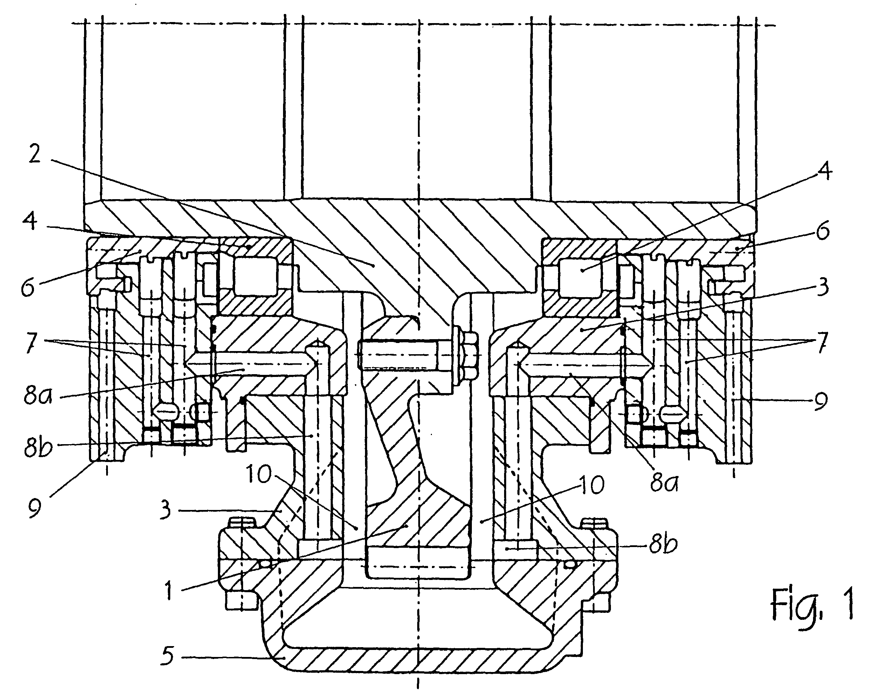

In den Figuren 1 und 2 ist mit 1 das Großrad eines Bahnantriebs bezeichnet, das von einem nicht näher dargestellten Ritzel angetrieben wird. Das Großrad 1 ist mit einem Großradkörper 2 verschraubt, der auf eine nicht näher dargestellte Achswelle eines Triebwagens aufgeschrumpft wird. Mit 3 ist ein Getriebekasten bezeichnet, in dem das Großrad 1 und das Antriebsritzel mittels Zylinderrollenlager 4 gelagert sind. Der Getriebekasten 3 schließt unten mit einer Ölwanne 5 ab, die bis etwa Zahnmitte des Großrades 1 mit Getriebeöl gefüllt ist. Die Abdichtung zwischen dem Getriebekasten 3 und dem Großradkörper 2 erfolgt mittels Labyrinthdichtungen.6 Diese berührungsfreien Spaltdichtungen erlauben hohe Relativgeschwindigkeiten und sind prinzipiell verschleißfrei. Allerdings ist ein Lecken der Labyrinthdichtungen 6 aufgrund des im schnellaufenden Betriebs sich einstellenden Ölnebeldrucks nicht völlig zu vermeiden, weshalb Leckageöl über ein Siphonsystem 7 herausgefiltert und im Kreislauf über Ölrückläufe 8 nahezu vollständig in die Ölwanne 5 zurückgeführt wird. Lediglich geringste Ölspuren, die nicht mehr in den Kreislauf finden, werden zusammen mit von außen angelagerten Schmutzpartikeln über die äußeren Schmutzabfuhrkammern 9 abgeführt.

Der Getriebekasten 3 hat eine strömungstechnisch optimale Kontur, wie sie gestrichelt in den Fig. 1 und 2 angedeutet ist. Diese Kontur erlaubt ein reibungs- und wirbelarmes Mitführen der Schleppströmung, bestehend aus einem Öl-Luft-Gemisch, so daß es zu keiner übermäßigen Erwärmung dieses Ölnebels kommt. Im Bereich der untersten Zähne und des Zahnfußes des Großrades 1 sind jedoch die Konturen der Seitenwände des Getriebekastens 3 derart gestaltet, daß es zu verengten Gebieten 10 kommt. Hierzu wird die Gehäusewand stetig so verstärkt, daß im Bereich des Scheitelwertes der Materialverdickungen die Innenwände des Getriebekastens 3 senkrecht bis hinunter zur Ölwanne 5 verlaufen, wodurch im unteren Zahnkranzbereich und des Zahnfußes des Großrades 1 die gewünschten Engstellen entstehen. Ein Ölrücklauf 8 des Großrades 1 wird durch eine Querbohrung 8a zum Siphonsystem 7 und eine sich anschließende vertikale Bohrung 8b realisiert, die in die Materialverdickung der Gehäusewände eingebracht sind. Die vertikale Bohrung 8b mündet in Höhe des unteren Zahnbereichs des Großrades 1 innerhalb des Scheitelwertes der Materialverdickung, also genau in dem Gebiet 10, in dem sich bei laufendem Getriebe unabhängig von der Drehrichtung der größte relative Unterdruck im Vergleich zum Gesamtsystem innerhalb des geschlossenen Getriebekastens 3 einstellt. Dieser Unterdruck verursacht einen Sog, der ganz erheblich den Abfluß des Lecköls aus den Labyrinthkammern der Dichtungen 6 bzw. den Siphonsystemen 7 verstärkt. Infolge der Absaugwirkung tritt nahezu kein Getriebeöl mehr aus, was die Umwelt entlastet und für lange Zeit eine konstante Ölmenge im Getriebekasten 3 garantiert.

Letzteres ist insbesondere deswegen für die Lebensdauer des Getriebes so wichtig, weil in schnellaufenden Getrieben mit einer möglichst geringen Menge Öl gefahren werden muß, um die Zähigkeit des sich bildenden Öl-Luft-Gemisches und damit dessen Erwärmungsfreudigkeit möglichst gering zu halten, ohne daß andererseits mangels Öl das Getriebe zerstört wird. Eine exakte Kontrolle des Ölstandes ohne Störbeeinflussung der Strömungsverhältnisse ist deshalb eine weitere Bedingung für Hochgeschwindigkeitsantriebe.

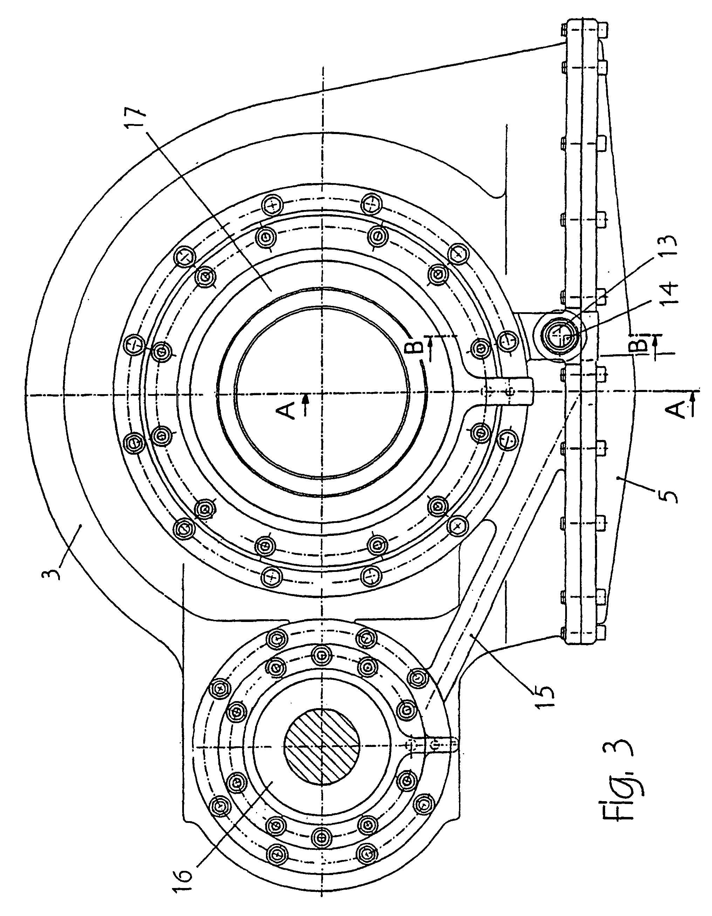

Die Figuren 2 und 3 zeigen hierzu ein Ausführungsbeispiel. Danach ist unmittelbar vor oder nach dem Scheitelpunkt der Materialverdickung in einer Wandung des Getriebekastens 3 eine vertikale Schwimmerbohrung 11 vorgesehen, die unten mit der Ölwanne 5 in Verbindung steht und oben von einer horizontalen Ausnehmung 12 gekreuzt wird, die nach außen mit einem Schauglas 13 abgedichtet ist. Mit Hilfe des Schwimmers 14 wird die Beobachtungshöhe über die Trennfuge von Getriebekasten 3 und Ölwanne 5 gehoben, die etwa mit dem Ölspiegel zusammenfällt, ohne daß weiter Zusatzteile notwendig wären, die die Anzeige verteuern oder sonstige Störeinflüsse im strömungssensiblen Bereich des Getriebeinnenraums begünstigen würden.

Wie aus Fig. 3 zu ersehen ist, fällt der Flächenschwerpunkt des Ölspiegels in vorteilhafter Weiterbildung der Erfindung exakt mit dem Ort der Ölstandsanzeige zusammen, wodurch die visuelle Erkennbarkeit des Ölstandes vollkommen unabhängig von einem eventuellen Schiefstand des Getriebekastens 3 wird.

Weiterhin ist aus Fig. 3 sehr gut erkennbar, daß auch die Ölrückläufe 15 vom Ritzellager 16 in das strömungsverengte Gebiet 10 unterhalb des Großradlagers 17 geführt sind, wodurch auch vom Ritzellager 16 das Öl unter Ausnutzung des Bernoulli-Effekts abgesaugt wird.

### Bezugszeichen

- 1: Großrad
- 2: Großradkörper
- 3: Getriebekasten
- 4: Zylinderrollenlager
- 5: Ölwanne
- 6: Wellendichtung
- 7: Siphonsystem.
- 8a, 8b: Ölrücklauf vom Großradlager
- 9: Schmut zabfuhrkammer
- 10: verengtes Gebiet
- 11: Schwimmerbohrung
- 12: Ausnehmung
- 13: Schauglas
- 14: Schwimmer
- 15: Ölrücklauf vom Ritzellager
- 16: Ritzellager
- 17: Großradlager

## Patentansprüche

1. Schnellaufendes Getriebe mit Ölschmierung, insbesondere für gekapselte Bahnantriebe, wobei Ölrückläufe (8, 15) aus den Labyrinthkammern berührungsfreier Wellendichtungen zur Ölwanne (5) des Getriebekastens führen, **dadurch gekennzeichnet, daß** die Ölrückläufe (8, 15) in Gebieten (10) münden, in denen sich im laufenden Betrieb und unabhängig von der Drehrichtung des Getriebes selbständig ein relativer Unterdruck einstellt, wobei die Gebiete (10) mit Unterdruck durch axiale Engstellen zwischen dem Zahnbereich des Großrades (1) und den angrenzenden Wandungen des Getriebekastens (3) gebildet sind.

2. Schnellaufendes Getriebe nach Anspruch 1, **dadurch gekennzeichnet, daß** die Engstellen durch Materialwulste in den Wandungen des Getriebekastens (3) gebildet sind.

3. Schnellaufendes Getriebe nach Anspruch 2, **dadurch gekennzeichnet, daß** die Materialwulste so geformt sind, daß die Schleppströmung in beiden Richtungen wirbelarm ist.

4. Schnellaufendes Getriebe nach Anspruch 1, **dadurch gekennzeichnet, daß** die Labyrinthkammern der Wellendichtungen(6) über ein Siphonsystem (7) an die Ölrückläufe (8, 15) angeschlossen sind.

5. Schnellaufendes Getriebe nach Anspruch 2, **dadurch gekennzeichnet, daß** die Ölrückläufe (8) vom Großradlager durch Bohrungen (8a, 8b) in den Materialwulsten realisiert sind.

6. Schnellaufendes Getriebe nach Anspruch 2, **dadurch gekennzeichnet, daß** die Ölrückläufe (15) vom Ritzellager durch in die Wandungen des Gehäusekastens (3) eingeformte Ölrückleitungen gebildet sind.

7. Ölstandsanzeige für schnellaufende Getriebe nach Anspruch 2, **dadurch gekennzeichnet, daß** in Scheitelnähe einer Materialwulst eine mit der Ölwanne (5) kommunizierende Bohrung (11) für einen Schwimmer (14) eingelassen ist, der durch ein Schauglas (13) sichtbar ist.

8. Ölstandsanzeige nach Anspruch 7, **dadurch gekennzeichnet, daß** die Bohrung (11) im Flächenschwerpunkt des zulässigen Ölbadspiegels liegt.

## Claims

1. A high-speed gearing with oil lubrication, in particular for enclosed railway drives, wherein oil drains (8, 15) lead out of the labyrinth chambers of non-contact shaft seals to the oil sump (5) of the gearbox, **characterized in that** the oil drains (8, 15) end in areas (10) in which a relative underpressure sets in during operation and regardless of the rotational direction of the gearing, wherein the areas (10) with underpressure are formed by axial narrowings between the toothed region of the wheel (1) and the adjacent walls of the gearbox (3).

2. The high-speed gearing according to claim 1, **characterized in that** the narrowings are formed by material swells in the walls of the gearbox (3).

3. The high-speed gearing according to claim 2, **characterized in that** the material swells are formed in such a way that the drag flow shows low turbulence in either direction.

4. The high-speed gearing according to claim 1, **characterized in that** the labyrinth chambers of the shaft seals (6) are connected to the oil drains (8, 15) by a siphon system (7).

5. The high-speed gearing according to claim 2, **characterized in that** the oil drains (8) of the wheel bearing are realized via boreholes (8a, 8b) in the material swells.

6. The high-speed gearing according to claim 2, **characterized in that** the oil drains (15) of the pinion bearing are formed by oil return lines incorporated in the walls of the gearbox (3).

7. An oil level display for high-speed gearings according to claim 2, **characterized in that** a borehole (11) for a floater (14) visible through an inspection glass (13) and communicating with the oil sump (5) is incorporated near the apex of a material swell.

8. The oil level display according to claim 7, **characterized in that** the borehole (11) lies in the area center of gravity of the permissible oil bath level.

## Revendications

1. Engrenage grande vitesse avec lubrification à huile, en particulier pour moteurs de traction blindés, des retours d'huile (8, 15) venant des chambres à labyrinthe de joints d'étanchéité d'arbre sans contact conduisant au carter d'huile (5) de la boîte d'engrenage, **caractérisé en ce que** lesdits retours d'huile (8, 15) débouchent dans des zones (10) où une dépression relative s'établit automatiquement en fonctionnement continu et indépendamment du sens de rotation de l'engrenage, les zones (10) de dépression étant formées par des passages étroits axiaux entre la zone dentée de la roue (1) et les parois adjacentes de la boîte d'engrenage (3).

2. Engrenage grande vitesse selon la revendication 1, **caractérisé en ce que** les passages étroits sont formés par des bourrelets de matière dans les parois de la boîte d'engrenage (3).

3. Engrenage grande vitesse selon la revendication 2, **caractérisé en ce que** les bourrelets de matière sont formés de manière à ce que le courant d'entraînement soit peu tourbillonnaire dans les deux sens.

4. Engrenage grande vitesse selon la revendication 1, **caractérisé en ce que** les chambres à labyrinthe des joints d'étanchéité d'arbre (6) sont raccordées aux retours d'huile (8, 15) par l'intermédiaire d'un système de siphon (7)

5. Engrenage grande vitesse selon la revendication 2, **caractérisé en ce que** les retours d'huile (8) du palier de la roue sont réalisés par des orifices (8a, 8b) prévus dans les bourrelets de matière.

6. Engrenage grande vitesse selon la revendication 2, **caractérisé en ce que** les retours d'huile (15) du palier du pignon sont réalisés par des tuyauteries de retour d'huile moulées dans les parois de la boîte d'engrenage (3).

7. Indication de niveau d'huile pour engrenage grande vitesse selon la revendication 2, **caractérisé en ce qu'**un alèsage (11) communiquant avec le carter d'huile (5) est prévu à proximité du sommet d'un bourrelet de matière pour un flotteur (14) qui est visible par un verre-regard (13).

8. Indication de niveau d'huile selon la revendication 7, **caractérisé en ce que** l'alèsage (11) est situé à l'équibarycentre de la surface du niveau du bain d'huile admissible.
